(19) Europäisches Patentamt
European Patent Office
Office européen des brevets

(11) Publication number: 0 454 226 A1

(12) EUROPEAN PATENT APPLICATION

(21) Application number: 91200915.6

(22) Date of filing: 17.04.91

(51) Int. Cl.[5]: C08G 73/02, C08G 73/04, C08G 65/32, C08G 73/00

(30) Priority: 21.04.90 NL 9000960

(43) Date of publication of application: 30.10.91 Bulletin 91/44

(84) Designated Contracting States: AT BE CH DE DK ES FR GB GR IT LI NL SE

(71) Applicant: STAMICARBON B.V.
Mijnweg 1
NL-6167 AC Geleen(NL)

(72) Inventor: Goethals, Eric Jozef
Huisgaverstraat 52
B-9761 Ouwegem-Zingem(BE)
Inventor: Hosteaux, Fried'l Pieter Francine
Spurriestraat 6
B-Wondelgem(BE)

# (54) Process for the preparation of block copolymers of tetrahydrofuran and azetidine, and the block copolymers obtained.

(57) The invention relates to a process for the preparation of polytetrahydrofuran block copolymers by polymerizing tetrahydrofuran under the influence of a catalyst in a first step, the catalyst being a cationic initiator with a non nucleophile anion, and is characterized in that azetidine is polymerized in a second block. The invention also relates to the block copolymers obtained.

EP 0 454 226 A1

The invention relates to a process for the preparation of block copolymers comprising a first and a second part, the first part comprising polytetrahydrofuran, and to the block copolymers obtained.

Block copolymers of polytetrahydrofuran are described for instance in JP-A-4743000. According to JP-A-4743000 these are prepared by iodizing polytetrahydrofuran, after which oxazoline is polymerised thereto, thereby obtaining a polytetrahydrofuran-polyoxazoline block copolymer.

The object of the invention is to provide a simpler synthesis and to obtain polytetrahydrofuran block copolymers with a narrow molecular weight distribution and having a second block with a different chemical structure. The narrow molecular weight distribution is notably advantageous if the copolymers are used as dispersing agents.

The process according to the invention for the preparation of polytetrahydrofuran block copolymers by catalyzed polymerization of tetrahydrofuran (THF) in a first step, the catalyst used being a cationic initiator with a non-nucleophile anion, is characterized by polymerization of azetidine in a second block.

If a cationic initiator with a non-nucleophile anion is used as catalyst, tetrahydrofuran and azetidine are co-polymerized to a block copolymer with a narrow molecular weight distribution.

A cationic initiator is for instance $Alkyl^+$, such as for instance methyl cation ($Me^+$) or ethyl cation ($Et^+$). Other cations are for example an acyl cation or a trialkyloxonium ion. This cation initiates the polymerization of tetrahydrofuran. Essential to good functioning of the catalyst for the preparation of a block copolymer with a narrow molecular weight distribution is the presence of a non-nucleophile anion in the cationic initiator. By "non-nucleophile" is also understood "hardly nucleophile". Non-nucleophile anions are for instance triflate, perchlorate, phosphorus hexafluoride, antimony hexafluoride and $BF_3OH^-$. As catalyst, highly suitable are for instance: methyl or ethyl triflate, acetyl fluoride, triethyloxonium triflate, the reaction product of acetyl fluoride with $SbF_5$. In principle, polyfunctional initiators can also be used, for instance triflate anhydride, so that block copolymers with more than two blocks are covered by the invention.

The addition of the catalyst depends on the ultimately desired molecular weight, since the molar ratio between the cationic initiator and the monomers determines the ultimate molar weight. Since the polymerization reaction does not terminate without special measures, addition of an extra monomer after the first polymerization step will result in a higher molecular weight.

The preparation of polytetrahydrofuran with utilization of a cationic initiator, such as for instance methyl triflate, is known from The British Polymer Journal 20 (1988), pp. 103-108. There is no indication, however, that azetidine can be converted to a block copolymer with polytetrahydrofuran. From US-A-3644567, a block copolymerization with triflate anhydride is known.

The polytetrahydrofuran block is preferably formed with more than 90% THF. A minor quantity of other monomers may also be added, however. The polymerization is mostly effected between 0/80 °C, and preferably between 10 and 40 °C.

As azetidine, preferably a nitrogen substituted azetidine is used. The substituent used preferably is an alkyl or aryl group with 1-10 carbon atoms, in particular 1-8 carbon atoms, such as for instance methyl, ethyl, propyl, n-butyl, cyclohexyl and 2-ethylhexyl. Further, it is highly advantageous to choose as azetidine a compound in which the azetide ring is additionally substituted with a hydroxyl group, more in particular in the 3-position. The hydroxyl group gives a formed azetidine block a polar character and also makes further reaction possible, for instance with an isocyanate.

N-alkyl azetidines with a hydroxyl group in the 3-position are easy to synthesize from an epoxyde and an alkyl amine. Epichlorohydrine is preferably used as epoxy then. The polymerization is preferably effected between 40-160 °C, in particular between 60 and 140 °C.

The molecular weight of the polytetrahydrofuran will mostly be between 500 and 20,000; the polyazetidine block generally has a molecular weight between 70 and 4,000.

The block copolymer may of course also comprise more than two blocks, for instance if a bifunctional initiator is used.

The block copolymer can be separated by evaporating the solvent, with preservation of the azetidinium terminal group.

The positively charged nitrogen is fairly stable in for instance aqueous media, and the polymer can be used as such.

The reaction product can also be mixed with a highly nucleative reagent such as an amine or a sulphide, causing the azetidinium ring to be opened. If an amine compound is used it is possible to neutralize the formed protonated amine by addition of a base, such as NaOH. Next, the block copolymer can be separated by freeze-drying or by evaporation of the solvent.

It is possible to control the molar weight of the block copolymer as a whole and the ratio of the molar weight of two segments. The polymerizations of the first and the second segment proceed by a so-called 'living mechanism'. The copolymers obtained have a narrow molecular weight distribution, for instance

characterized by a low polydispersity (D). The polydispersity can be measured with gel permeation chromatography (GPC) ($D = M_w/M_n$ with $M_w$ = weight average molecular weight and $M_n$ is number average molecular weight). The polydispersity of the polymers according to the invention is normally lower than 2.0.

If the block polymer obtained consists completely of tetrahydrofuran and azetidine units, it can be characterized by the following formula:

$$X(-O-CH_2-CH_2-CH_2-CH_2-)_n-(\underset{R^1}{\underset{|}{N}}-CH_2-CHR^2-CH_2-)_mY$$

where X is the initiator and Y the terminal group, $R^1$ is an alkyl substituent and $R^2$ is H or OH. The polyether block (poly-THF) is of a rather apolar nature. The block copolymer can be used as such as dispersion agent if the polyether block and the polyamine block are compatible with different substances to be dispersed. The polyether block polyamine copolymer further is very suitable as dispersion agent because the polyamine block is highly polar and hydrophilic after (partial) protonation.

If a nomenclature is used based on the monomers, this block copolymer is called 'polytetrahydrofuran block polypropylene imine copolymer'.

If in the above formula $R^2$ is a hydroxyl group, the polyhydroxy amine block is of a rather polar nature, giving a good compatibility with polar substances. On the other hand, the hydroxy groups can react (partially) with for instance isocyanates and epoxy groups. The hydroxyamine group can be further functionalized in this way. In that case in particular a block copolymer with one azetidine unit can already be very suitable.

The invention will now be elucidated with the following examples, without being restricted thereto.

Example I

100 ml (1.23 mole) tetrahydrofuran (THF) was siphoned over into a 250 ml double-walled reaction vessel. 1.22 ml (0,0110 mole) methyl triflate was added with stirring at 25° C. After 18 minutes the reaction was terminated by the addition of 0.18 mole cyclohexyl azetidinol (CHA). The reaction mixture was poured out in water and freeze-dried. The molecular weight of the resulting p-THF with CHA end group (poly-THF-CHA), measured by NMR, was 2277. (The molecular weight was determined by relating the peak area of the methyl group of the initiator to the peak area of the poly-THF and azetidine). The polydispersity was less than 1.3. The total yield was 35 g.

Example II

As in example I, a poly(THF) cyclohexyl azetidinol adduct was prepared, having a molecular weight of 2160 (NMR) and D < 1.3.

Examples III-VII

Quantities of the poly-THF-CHA as stated in table 1 were added to 1 g CHA (6.45 mole) in each case.

Table 1

| Example | p-THF-CHA as per | g | mmol |
|---|---|---|---|
| III | ex. I | 0.35 | 0.129 |
| IV | ex. I | 1.78 | 0.645 |
| V | ex. I | 0.44 | 0.16 |
| VI | ex. II | 1.39 | 0.645 |
| VII | ex. II | 0.69 | 0.32 |

Each mixture was transferred into a polymerization tube, which was sealed up by fusion under vacuum. The mixture was then heated to 100° C for 45 hours.

The molecular weights of the polymers obtained, which were isolated by dissolving them in THF, pouring out the solution in water and freeze-drying, were determined by NMR and GPC (table 2).

Table 2

| Example | III | IV | V | VI | VII |
|---|---|---|---|---|---|
| Mw p. THF (NMR) | 2800 | 1950 | 2340 | 1730 | 2270 |
| Mw p. THF (GPC) | 3350 | 3350 | 3350 | 2450 | 2450 |
| Mw p. CHA (NMR) | 7970 | 1530 | 6590 | 2790 | 5110 |
| Mw p. CHA (GPC) | 3540 | 1450 | 4840 | 2900 | 3130 |
| Mw polymer (NMR) | 10770 | 3480 | 8930 | 4520 | 7380 |
| Mw polymer (GPC) | 6890 | 4800 | 8190 | 5350 | 5580 |

From these data the ratio (in mole) between CHA and THF in a polymer can be derived (table 3). The polydispersity is also given in table 3.

Table 3

| mole CHA/mole THF | III | IV | V | VI | VII |
|---|---|---|---|---|---|
| theoretical | 50 | 10 | 40 | 10 | 20 |
| NMR | 51 | 9.8 | 42.5 | 18 | 32.9 |
| via GPC | 22.8 | 9.4 | 31.2 | 18.7 | 20 |
| polydispersity | 1.92 | 1.72 | 1.77 | 1.98 | 1.61 |

From these tables can be concluded that block copolymers can be produced with different molecular weights, with different molar ratio's between the two blocks and with a low polydispersity.

## Claims

1. Process for the preparation of polytetrahydrofuran block copolymers by polymerizing tetrahydrofuran under the influence of a catalyst in a first step, the catalyst being a cationic initiator with a non nucleophile anion, characterized in that azetidine is polymerized in a second block.

2. Process according to claim 1, characterized in that alkyl triflate is used as catalyst.

3. Process according to claim 1, characterized in that methyl or ethyl triflate is used as catalyst.

4. Process according to any one of the claims 1-3, characterized in that an N-alkyl azetidine is used as azetidine.

5. Process according to any one of the claims 1-4, characterized in that a 3-hydroxyl azetidine is used as azetidine.

6. Block copolymer substantially consisting of tetrahydrofuran and azetidine.

7. Block copolymer according to claim 6, characterized in that the block copolymer has a polydispersity

lower than 2.0.

8. Block copolymer according to any one of the claims 6-7, characterized in that the THF block has a molecular weight between 500 and 20,000 and the azetidine block a molecular weight between 70 and 4,000.

9. Block copolymer according to any one of the claims 6-8, characterized in that the azetidine is an azetidine substituted in the N position.

10. Block copolymer according to any one of the claims 6-9, characterized in that the azetidine is a 3-hydroxyl azetidine.

11. Application of a block copolymer according to any one of the claims 6-10 as a dispersion agent.

12. Dispersion comprising a block copolymer according to any one of the claims 6-10 and a filler or a pigment.

13. Coating composition comprising pigment and binding agent and, if required, a dissolving and dispersing liquid, 0.1-10 wt.% of the resin mixture being a copolymer according to any one of the claims 6-10.

14. Block copolymer and/or process as substantially described in the specification and/or the examples.

European Patent Office

# EUROPEAN SEARCH REPORT

Application Number

**EP 91 20 0915**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DATABASE WPI, no. 73-56950v [39], Derwent Publications Ltd, London, GB; & JP-A-47 043 000 (JAPAN SYNTHETIC RUBBER) * Abstract * |  | C 08 G 73/02<br>C 08 G 73/04<br>C 08 G 65/32<br>C 08 G 73/00 |
|  | - - - - - |  | **TECHNICAL FIELDS SEARCHED (Int. Cl.5)** |
|  |  |  | C 08 G |

The present search report has been drawn up for all claims

| Place of search | Date of completion of search | Examiner |
|---|---|---|
| The Hague | 05 June 91 | LEROY ALAIN |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document